# EUROPÄISCHE PATENTSCHRIFT

(11) **EP 2 564 084 B1**
(45) Veröffentlichungstag und Bekanntmachung des Hinweises auf die Patenterteilung: **31.12.2014**
(21) Anmeldenummer: 11719503.2
(22) Anmeldetag: 26.04.2011
(51) Int. Cl.: G01B 7/30

(54) **WÄLZLAGERANORDNUNG MIT EINEM WINKELSENSOR**
ROLLER BEARING ARRANGEMENT WITH AN ANGLE SENSOR
SYSTÈME DE PALIER À ROULEMENT À CAPTEUR D'ANGLE

(30) Priorität: 26.04.2010 DE 102010018207
(43) Veröffentlichungstag der Anmeldung: 06.03.2013
(73) Patentinhaber: Schaeffler Technologies GmbH & Co. KG, 91074 Herzogenaurach (DE)
(72) Erfinder: KEGELER, Jörg, 98553 Schleusingen (DE); WEYH, Jürgen, 98547 Viernau (DE)
(86) Internationale Anmeldenummer: PCT/EP2011/056567
(87) Internationale Veröffentlichungsnummer: WO 2011/134955

(56) Entgegenhaltungen:
- EP-A1- 0 522 933
- US-A1- 2006 104 558

## Beschreibung

### Gebiet der Erfindung

Die Erfindung betrifft eine Wälzlageranordnung mit einem Winkelsensor nach dem Oberbegriff des Anspruchs 1 sowie ein Verfahren zur Montage einer solchen Wälzlageranordnung mit einem Winkelsensor.

### Hintergrund der Erfindung

Eine gattungsgemäße Anordnung, welche ein Wälzlager sowie einen als Resolver bezeichneten, als Absolutwertgeber ausgebildeten Winkelsensor umfasst, ist beispielsweise aus der US 2006/0087315 A1 bekannt. Der Winkelsensor weist einen mit dem Außenring des Wälzlagers verbundenen Stator auf, sowie einen mit dem Stator zusammenwirkenden Rotor, der als exzentrischer Ring ausgebildet und durch den Innenring des Wälzlagers gebildet ist.

Ein weiteres mit einem zur Erfassung eines Rotationsparameters vorgesehenen Sensor ausgestattetes Wälzlager ist aus der EP 1 518 126 B1 bekannt. In diesem Fall sind Mikrosende- und Mikroempfangspulen des Sensors auf einem Träger, nämlich einem Substrat einer gedruckten Schaltung, angeordnet. Weiter ist auf dem Träger ein Verarbeitungsschaltkreis angeordnet, der einen Oszillator sowie Phasendemodulatoren enthält.

Aus der US 7,135,860 B2 ist ein nach dem Prinzip der variablen Reluktanz arbeitender Resolver bekannt, der einen Rotor mit mehreren Detektionsbereichen aufweist, was insbesondere einer zuverlässigen Nullpunkterkennung dienen soll.

### Aufgabe der Erfindung

Der Erfindung liegt die Aufgabe zugrunde, eine insbesondere für kleinere Wälzlagertypen, beipielsweise Rillenkugellager mit weniger als 40 mm Außendurchmesser, geeignete Anordnung aus Lagerung und Winkelsensor anzugeben, welche sich sowohl durch einen geringen Platzbedarf als auch durch eine besonders einfache Montagemöglichkeit auszeichnet. Weiterhin ist es Aufgabe der Erfindung, einen fertigungstechnisch vorteilhaften Winkelsensor bereitzustellen, welcher auch ohne Zusammenbau mit einem Wälzlager verwendbar ist.

### Zusammenfassung der Erfindung

Diese Aufgabe wird erfindungsgemäß gelöst durch eine einen nach dem Prinzip der variablen Reluktanz arbeitenden Winkelsensor und ein Wälzlager umfassend Anordnung mit den Merkmalen des Anspruchs 1, durch eine Sensoranordnung mit den Merkmalen des Anspruchs 21, sowie durch ein Verfahren zur Montage einer einen zur Absolutwertmessung ausgebildeten Winkelsensor aufweisenden Wälzlageranordnung mit den Merkmalen des Anspruchs 22. Im Folgenden im Zusammenhang mit den Vorrichtungen genannte Ausgestaltungen und Vorteile der Erfindung gelten sinngemäß auch für das Montageverfahren und umgekehrt.

Die den Winkelsensor aufweisende Wälzlageranordnung umfasst
- ein Wälzlager mit zwei zu seiner Rotationsachse konzentrischen, jeweils einoder mehrteiligen Lagerringen, nämlich einem Innenring und einem Außenring, wobei zwischen den Lagerringen mindestens eine Reihe Wälzkörper, beispielsweise Kugeln, Nadeln, Zylinderrollen, Kegelrollen, Kugelrollen oder Tonnenrollen, angeordnet sind,
- einen mit dem Wälzlager gekoppelten, zur Detektion der Winkelstellung des ersten Lagerrings relativ zum zweiten Lagerring vorgesehenen, das heißt zu einer absoluten Winkelmessung geeigneten, Winkelsensor, welcher
- einen drehfest mit einem Lagerring oder Umgebungsbauteil, insb. Gehäuse, verbundenen Sensorring und eine drehfest mit dem zweiten Lagerring verbundene Maßverkörperung aufweist, wobei
- auf dem Sensorring Spulen, nämlich mindestens eine - vorzugsweise genau eine - Sendespule und mindestens eine Empfangsspule, angeordnet sind, wobei ein Signal über einen magnetischen Kreis zwischen der Sendespule und der Empfangsspule übertragbar und durch die Maßverkörperung eine variable Reluktanz in dem magnetischen Kreis gegeben ist,
- die Sendespule eine mit der Rotationsachse des Wälzlagers identische Symmetrieachse, nämlich Mittelachse, aufweist und in einem einen Teil des magnetischen Kreises bildenden, einen U-förmigen Querschnitt aufweisenden, ringförmigen, zur Rotationsachse konzentrischen, mit einem der Lagerringe verbundenen Schalenkern angeordnet ist,
- die Maßverkörperung als zwischen oder vor den Schenkeln des U-förmigen Schalenkerns angeordneter, das heißt der Basis des U-förmigen Schalenkerns gegenüberliegender Ring ausgebildet ist,
- wenigstens eine Empfangsspule teilweise innerhalb und teilweise außerhalb des Schalenkerns angeordnet ist.

Die Maßverkörperung, welche dazu dient, den magnetischen Kreis zu schließen, ist vorzugsweise am rotierenden Ring, im Fall einer Lageranordnung mit rotierender Welle also am Innenring, angeordnet. Im Fall eines stehenden Innenrings und rotierenden Außenring ist die Maßverkörperung dementsprechend mit dem Außenring verbunden.

In besonders fertigungsfreundlicher Weise ist mindestens eine Spule, vorzugsweise jede Spule, des Sensorrings als gedruckte Schaltung ausgebildet. In bevorzugter Ausgestaltung sind hierbei verschiedene Empfangsspulen, nämlich jeweils durch mehrere Windungen gebildete Sinus- und Cosinus-Spulen, vorgesehen, wobei die Windungen der Sinus- beziehungsweise Cosinus-Spulen alternierend auf aufeinanderliegenden Layern einer als Mulitlayer-Leiterplatte ausgebildeten gedruckten Schaltung angeordnet sind. Dabei sind vorzugsweise auf jedem Layer zwei Windungen einer Sinus-Spule beziehungsweise zwei Windungen einer Cosinus-Spule angeordnet. Hierdurch ist eine gute Fehlerkompensation, mit der insbesondere geometrische Ungenauigkeiten und damit zusammenhängende Inhomogenitäten im Magnetfeld ausgeglichen werden, erreichbar. Die von den verschiedenen Sinus-Spulen beziehungsweise Cosinus-Spulen gelieferten Signale werden durch Reihenschaltung voneinander subtrahiert und außerhalb des Sensors weiterverarbeitet. Gemäß einer alternativen, besonders platzsparenden Ausführungsorm sind Sinus- und Cosinus-Spulen auf dem selben Layer angeordnet.

Die Einspeisung eines Signals, beispielsweise 4 kHz-Signals, in die Spulen, welche als mehrlagige Platine aufgebaut sind, erfolgt vorzugsweise von innen nach außen. Damit werden kapazitive Kopplungen zwischen Primär- und Sekundärspule minimiert, wodurch Schirm-Layer auf der Platine eingespart werden können.

Gemäß einer bevorzugten Ausführungsform ist das Wälzlager als Radiallager, beispielsweise Rillenkugellager, ausgebildet, wobei der Sensorring mit dem Außenring als erstem Lagerring und die Maßverkörperung in Form eines zur Lagerachse exzentrischen Rings, vorzugsweise doppelexzentrischen Rings, mit dem Innenring als zweitem Lagerring verbunden ist. Abweichend von einer exzentrischen oder doppelexzentrischen Gestaltung des als Maßverkörperung fungierenden Rings sind auch Ausführungsformen realisierbar, in denen der Ring zentrisch zur Rotationsachse angeordnet ist und - in axialer Blickrichtung - ausschließlich kreisförmige Konturen hat, jedoch eine längs des Umfangs variierende Dicke aufweist. In beiden Ausführungsformen ist ein winkelabhängiger Luftspalt zwischen Maßverkörperung und Schalenkern gegeben.

Um den metallischen Schalenkern auf einfache und stabile Weise mit einer relativ zum Außenring starren Haltekonstruktion des Winkelsensors sowie mit den Spulen zu verbinden, ist der Schalenkern an seinem radial äußeren U-Schenkel mehrfach durchbrochen. Die Haltekonstruktion umfasst vorzugsweise ein als Kunststoffspritzgussteil ausgebildetes Halteelement, welches direkt am Außenring befestigt und radial von einem Stützring aus Metall umgeben ist, der eine Stirnseite des Außenrings kontaktiert. Zum einen aus Metall und zum anderen aus Kunststoff gebildete Teile, wie der Schalenkern und das Halteelement, sind rationell im Zwei-Komponenten-Spritzgussverfahren herstellbar.

Der Stützring überragt in vorteilhafter Ausgestaltung den Schalenkern in Axialrichtung, wobei der Stützring gemäß einer ersten Variante in seinem den Schalenkern überragenden Bereich eine von seinem Umfang radial nach innen abknickende Befestigungslasche zur Halterung eines an den Sensorring angeschlossenen Kabels aufweist. Gemäß einer alternativen Variante weist der Stützring lediglich eine Aussparung an seinem Umfang auf, welche zur Durchführung eines Kabels vorgesehen ist. Dieses Kabel ist in diesem Bereich vorzugsweise als flexible Leiterplatte ausgebildet und an einem streifenförmigen Halter befestigt, welcher einstückig mit dem Schalenkern ausgebildet ist und in die zur Rotationsachse des Winkelsensors sowie der gesamten Wälzlageranordnung orthogonale U-Basis des Schalenkerns übergeht.

Im Schalenkern ist optional ein Eisenpulverkern vorgesehen. Dieser vereint gute magnetische Eigenschaften in vorteilhafter Weise mit niedriger elektrischer Leitfähigkeit und geringen Wirbelströmen. In analoger Weise kann auch die Maßverkörperung durch ein Eisenpulver aufweisendes Bauteil gebildet sein.

Eine besonders gute Raumausnutzung ist in einer bevorzugten Ausführungsform gegeben, bei welcher der radial äußere U-Schenkel des Schalenkerns radial außerhalb des Innenrings und der radial innere U-Schenkel des Schalenkerns radial innerhalb der durch den Innenring gebildeten Laufbahn der Wälzkörper angeordnet ist. Hierbei ist der Radius des durch den äußeren U-Schenkel beschriebenen, zur Rotationsachse symmetrischen Kreises vorzugsweise kleiner als der Innenradius des Außenrings.

Kurz zusammengefasst weist die erfindungsgemäße Wälzlageranordnung folgende Merkmale auf:
- ein Wälzlager, mit dem ein nach dem Prinzip der variablen Reluktanz arbeitender, als Absolutwertgeber ausgebildeter Winkelsensor verbunden ist, welcher
- einen drehfest mit einem der Lagerringe des Wälzlagers verbundenen Sensorring und eine drehfest mit dem zweiten Lagerring verbundene, als Ring ausgebildete Maßverkörperung aufweist, wobei
- auf dem Sensorring Spulen, nämlich mindestens eine Sendespule und mindestens eine Empfangsspule, angeordnet sind, und
- die Sendespule eine mit der Rotationsachse identische Symmetrieachse aufweist und in einem einen U-förmigen Querschnitt aufweisenden, ringförmigen, zur Rotationsachse des Wälzlagers konzentrischen metallischen Schalenkern angeordnet ist, und
- eine Empfangsspule teilweise innerhalb und teilweise außerhalb des Schalenkerns angeordnet ist.

Der Vorteil der Erfindung liegt insbesondere darin, dass mit dem U-förmigen Schalenkern, in welchem sich eine einzige Sendespule - ohne Eisenkern - befindet, ein sehr raumsparender, unter anderem für die Kommutierung von Elektromotoren verwendbarer Resolver bereitgestellt wird, der für kleine Wälzlagertypen, beispielsweise Rillenkugellager mit 15 mm Innendurchmesser und 35 mm Außendurchmesser, Temperaturen bis über 150 °C, sowie starke Stoß- und Vibrationsbelastungen geeignet ist.

Die Montage einer mit dem Winkelsensor ausgestatteten Wälzlageranordnung erfolgt erfindungsgemäß in folgenden Schritten:
- ein als Radiallager, zum Beispiel Rillenkugellager oder Schrägkugel- oder - rollenlager, ausgebildetes Wälzlager mit zwei Lagerringen, nämlich einem Innenring und einem Außenring, wobei in jedem Lagerring mindestens eine einer Wälzkörperlaufbahn benachbarte, prinzipiell zur Aufnahme eines Dichtrings geeignete umlaufende Nut ausgebildet ist, wird bereitgestellt,
- ein zur Rotationsachse des Wälzlagers exzentrischer, als Maßverkörperung fungierender metallischer Ring wird in die umlaufende Nut des Innenrings eingeschnappt,
- ein als Kunststoffspritzgussteil ausgebildetes Halteelement wird in einen Stützring aus Metall, dessen Außendurchmesser höchstens dem Außendurchmesser des Außenrings des Wälzlagers entspricht, eingesetzt, wobei zwischen dem Innendurchmesser des Stützrings und einem Abschnitt des Halteelements ein ringförmiger Spalt verbleibt,
- das Halteelement wird in die umlaufende Nut des Außenrings eingeschnappt, wobei der Stützring an einer Stirnseite des Außenrings anschlägt,
- ein als gedruckte Schaltung ausgebildeter, zur Durchführung einer Winkelmessung nach dem Prinzip der variablen Reluktanz vorgesehener Sensorring, auf welchem Spulen, nämlich mindestens eine Sendespule und mindestens eine Empfangsspule, angeordnet sind, wird auf das Halteelement derart aufgesteckt, dass er sich teilweise im ringförmigen Spalt zwischen dem Halteelement und dem Stützring und teilweise radial innnerhalb des Halteelementes befindet, wobei zwischen dem Innenumfang des Halteelementes und den radial innerhalb des Halteelementes angeordneten Teilen des Sensorrings Schlitze verbleiben, die Abschnitte eines Ringraums beschreiben,
- ein ringförmiger, im Querschnitt U-förmiger, zur Stirnseite des Wälzlagers hin offener Schalenkern aus Metall, der ebenso wie der exzentrische Ring eine Komponente eines magnetischen Kreises bildet, wird in Axialrichtung auf die Anordnung aus Halteelement, Stützring und Sensorring aufgeschoben und mit dieser verschnappt, wobei ein radial außen angeordneter U-Schenkel des Schalenkerns, am Innenumfang des Halteelements anliegend, in den an dieses grenzenden Ringraum eingreift, während ein innerer U-Schenkel des Schalenkerns vollständig radial innerhalb des Sensorrings angeordnet ist.

Der innere U-Schenkel des Schalenkerns hat einen Innendurchmesser, der etwas größer als der Innendurchmesser des Innenrings ist. Optional wird auf die vom Innenring des Wälzlagers umgebene Welle im Bereich des radial innen angeordneten U-Schenkels des Schalenkerns, an die Stirnseite des Innenrings anschlagend, eine innere Stützhülse aufgeschoben.

Eine Sensoranordnung, mit der die der Erfindung zugrunde liegende Aufgabe gelöst wird, weist einen eine Rotationsachse umschließenden Sensorring und eine relativ zu diesem rotierbare Maßverkörperung auf, wobei
- auf dem Sensorring Spulen, nämlich mindestens eine Sendespule und mindestens eine Empfangsspule, angeordnet sind, wobei ein Signal über einen magnetischen Kreis zwischen der Sendespule und der Empfangsspule übertragbar und durch die Maßverkörperung eine variable Reluktanz in dem magnetischen Kreis gegeben ist,
- die Sendespule in einem einen Teil des magnetischen Kreises bildenden, einen U-förmigen Querschnitt aufweisenden, ringförmigen, zur Rotationsachse konzentrischen Schalenkern angeordnet ist,
- die Maßverkörperung als Ring, welcher den magnetischen Kreis zwischen den Schenkeln des U-förmigen Schalenkerns schließt, ausgebildet ist,
- eine Empfangsspule teilweise innerhalb und teilweise außerhalb des Schalenkerns angeordnet ist.

Nachfolgend werden Ausführungsbeispiele der Erfindung anhand einer Zeichnung näher erläutert. Hierin zeigen:

### Kurze Beschreibung der Zeichnung

- Fig. 1: Ein erstes Ausführungsbeispiel einer Wälzlageranordnung mit Winkelsensor in perspektivischer Ansicht,
- Fig. 2: die Anordnung nach Fig. 1 in Draufsicht,
- Fig. 3: die Anordnung nach Fig. 1 in einer Schnittdarstellung,
- Fig. 4: Spulen eines Sensorrings des Winkelsensors der Anordnung nach Fig. 1,
- Fig. 5: ein zweites Ausführungsbeispiel einer Wälzlageranordnung mit Winkelsensor in perspektivischer, geschnittener Ansicht,
- Fig. 6: ausschnittsweise die Anordnung nach Fig. 5 in Draufsicht,
- Fig. 7, 8: verschiedene Varianten von Spulen eines Sensorrings des Winkelsensors der Anordnung nach Fig. 5.

### Ausführliche Beschreibung der Zeichnung

Die nachfolgenden Ausführungen, insbesondere zur Gestaltung des Winkelsensors, beziehen sich, soweit nicht anders angegeben, stets auf alle Ausführungsbeispiele. Für gleichartige oder gleichwirkende Teile werden dieselben Bezugszeichen verwendet.

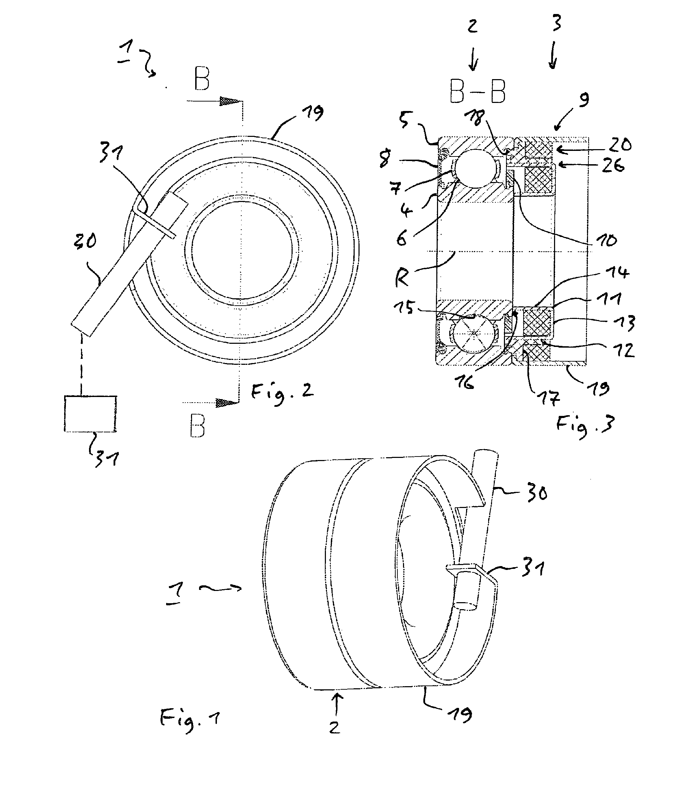

Eine in den Figuren 1 bis 3 dargestellte, insgesamt mit dem Bezugszeichen 1 gekennzeichnete Wälzlageranordnung setzt sich zusammen aus einem Wälzlager 2, nämlich einem Rillenkugellager, und einem Winkelsensor 3. Als Komponenten des Wälzlagers 2 sind in Fig. 3 ein Innenring 4, ein Außenring 5, Wälzkörper 6, nämlich Kugeln, ein diese führender Käfig 7, sowie eine Dichtscheibe 8 an einer ersten Stirnseite des Wälzlagers 2 zu erkennen.

Der mit dem Wälzlager 2 gekoppelte Winkelsensor 3 weist einen Sensorring 9 auf, der drehfest mit dem Außenring 5 verbunden ist, sowie eine Maßverkörperung 10, die als relativ zur Rotationsachse R des Wälzlagers 2 exzentrischer Metallring ausgebildet und drehfest mit dem Innenring 4 verbunden ist.

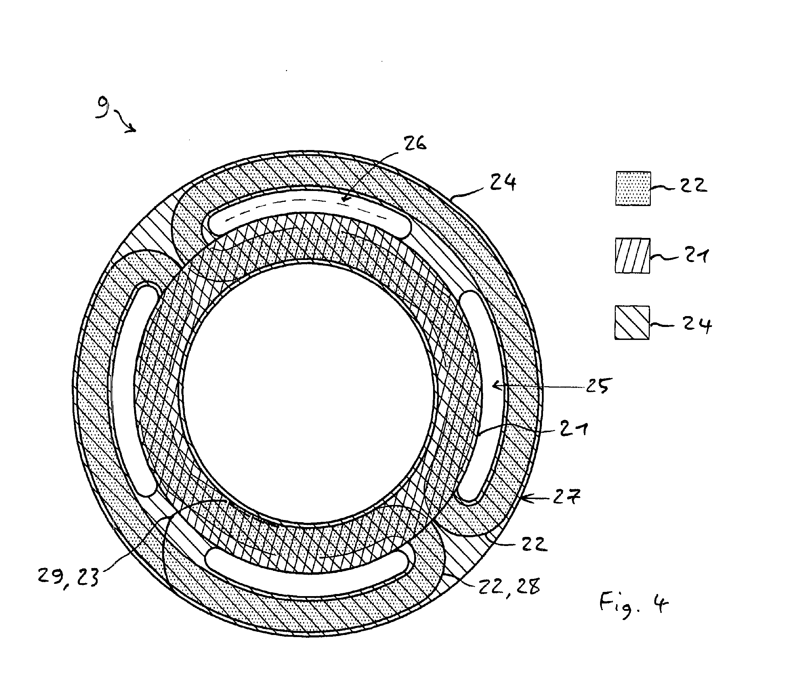

Hinsichtlich des Aufbaus des Sensorrings 9 wird auf die Figuren 3 und 4 verwiesen. Als metallische Komponente weist der Sensorring 9 einen ringförmigen, zur Rotationsachse R des Wälzlagers 2 konzentrischen, im Querschnitt U-förmigen Schalenkern 11 auf. Das U-Profil des Schalenkerns 11 ist zur der Dichtscheibe 8 abgewandten Stirnseite des Wälzlagers 2 hin offen, wobei ein äußerer U-Schenkel 12 auf der Oberfläche eines gedachten Zylinders liegt, dessen Symmetrieachse mit der Rotationsachse R identisch ist, und dessen Radius größer als der Außenradius des Innenrings 4, jedoch kleiner als der Innenradius des Außenrings 5 ist. An den äußeren U-Schenkel 12 schließt sich eine in radialer Richtung - bezogen auf die Rotationsachse R - verlaufende U-Basis 13 an; an diese wiederum schließt sich ein innerer U-Schenkel 14 an, der auf der Oberfläche eines gedachten, zur Rotationsachse R konzentrischen Zylinders liegt, dessen Radius größer als der Innenradius des Innenrings 4, jedoch kleiner als der Außenradius des Innenrings 4 ist. Der minimale Radius der Laufbahn 15 der Wälzkörper 6 auf dem Innening 4, das heißt der minimale Abstand der Laufbahn 15 von der Rotationsachse R, ist größer als der Radius des durch den inneren U-Schenkel 14 beschriebenen Zylinders. Zwischen dem der Stirnseite des Wälzlagers 2 zugewandten Ende des inneren U-Schenkels 14 und dem Innenring 4 ist ein Dichtspalt 16 gebildet.

Zur Halterung des Schalenkerns 11 sowie der weiteren, im folgenden näher beschriebenen Komponenten des Sensorrings 9 am Außenring 5 ist ein Halteelement 17 aus Kunststoff vorgesehen, das in einer umlaufenden Nut 18 im Außenring 5 befestigt ist. Radial außerhalb des Halteelementes 17, mit einem Außendurchmesser, der nur geringfügig kleiner als der Außendurchmesser des Außenrings 5 ist, befindet sich ein Stützring 19 aus Blech, der an der Stirnseite des Außenrings 5 anschlägt und als Montagehilfsmittel dient, sowie einen mechanischen Schutz des Winkelsensor 3 darstellt. Zwischen der inneren Mantelfläche des Stützrings 19 und dem Halteelement 17 ist ein Ringraum 20, das heißt ein ringförmiger Spalt, gebildet, der in der fertig montierten Wälzlageranordnung 1 (Fig. 1-3) mit im Folgenden näher beschriebenen Komponenten des Sensorrings 9 ausgefüllt ist.

Der Sensorring 9 weist eine Sendespule 21 auf, die konzentrisch zur Rotationsachse R, das heißt im wesentlichen in einer zur Stirnseite des Wälzlagers 2 parallelen Ebene liegend, vollständig innerhalb des U-Profils des Schalenkerns 11 angeordnet ist. Der mittlere Durchmesser der Sendespule 21 ist etwa so groß wie der Durchmesser der Laufbahn 15 auf dem Innenring 4. Im Ausführungsbeispiel ist die Sendespule 21 als 12-lagige Multilayer-Leiterplatte ausgeführt. Mit der Sendespule 21, die mit einem Signal mit einer Frequenz von beispielsweise 4000 Hz beaufschlagt wird, wirken mit einer Kopplung in der Art eines Transformators verschiedene Empfangsspulen 22,23 zusammen. Jede der Empfangsspulen 22,23 ist teilweise innerhalb des U-Profils des Schalenkerns 11 und teilweise außerhalb dieses U-Profils angeordnet. Die entsprechende Leiterplatte 24, auf welcher die analog der Sendespule 21 als gedruckte Schaltung ausgeführten Empfangsspulen 22,23 angeordnet sind, weist mehrere segmentartige, einzelne Abschnitte eines Ringraums beschreibende Öffnungen 25 auf. Zum einen ragen in diese Öffnungen 25 Abschnitte des Halteelements 17; zum anderen verbleiben bei auf das Halteelement 17 aufgesteckter Leiterplatte 24 noch Schlitze 26 radial unmittelbar innerhalb des Halteelementes 17, durch welche im komplett montierten Zustand Abschnitte des äußeren U-Schenkels 12 des Schalenkerns 11 gesteckt sind. Diese Abschnitte des äußeren U-Schenkels 12 ragen in axialer Richtung - bezogen auf die Rotationsachse R - weiter auf die Wälzkörper 6 zu, sogar über die dem Winkelsensor 3 zugewandte Stirnseite des Wälzlagers 2 hinaus, als der innere U-Schenkel 14.

Radial innerhalb des dem Wälzlager 2 zugewandten Endes des äußeren U-Schenkels 12 befindet sich die Maßverkörperung 10, wobei zwischen den genannten Komponenten 12,10 des zur Winkelmessung benutzten magnetischen Kreises ein variabler, winkelabhängiger Spalt gebildet ist. Zur Messung des von der Spaltbreite abhängigen magnetischen Widerstandes sind als Empfangsspulen 22,23 verschiedene Sinus-Spulen 22 sowie in Figur 4 lediglich angedeutete Cosinus-Spulen 23 vorgesehen. Dabei befinden sich auf einem einzelnen Layer 27, das heißt auf einer einzelnen Lage, der Leiterplatte 24 entweder zwei Windungen 28 der Sinus-Spulen 22 oder zwei Windungen 29 der Cosinus-Spulen 23, wobei die Windungen 28 der Sinus-Spulen 22 gegenüber den Windungen 29 der Cosinus-Spulen 23 um 90° verdreht sind. Die Windungen 28 der Sinus-Spulen 22 und die Windungen 29 der Cosinus-Spulen 23 sind alternierend auf verschiedenen Layern 27 angeordnet, das heißt auf einen Layer 27 mit Windungen 28 der Sinus-Spulen 22 ist ein weiterer Layer 27 mit Windungen 29 der Cosinus-Spulen 23 gelegt, hierauf wieder ein den Sinus-Spulen 22 zugehörender Layer 27 und so weiter. Insgesamt setzt sich die Leiterplatte 24 aus je 11 Layern 27 der Sinus-Spulen 22 sowie der Cosinus-Spulen 23 zusammen.

Das vom Winkelsensor 3 gelieferte elektrische Signal wird über ein an die Spulen 21,22,23 angeschlossenes Kabel 30 an eine vom Winkelsensor 3 räumlich getrennte Ansteuer- und Auswerteeinheit 31 übertragen. Durch die räumliche Trennung zwischen dem Winkelsensor 3 und jeglichen elektronischen Komponenten ist die Wälzlageranordnung 1 einschließlich Winkelsensor 3 besonders für hohe Betriebstemperaturen von beispielsweise bis zu 155 °C geeignet. Das Kabel 30 ist an einer Befestigungslasche 31, die von einem den Schalenkern 11 in Axialrichtung überragenden Bereich des Stützrings 19 nach innen abknickt, gehalten.

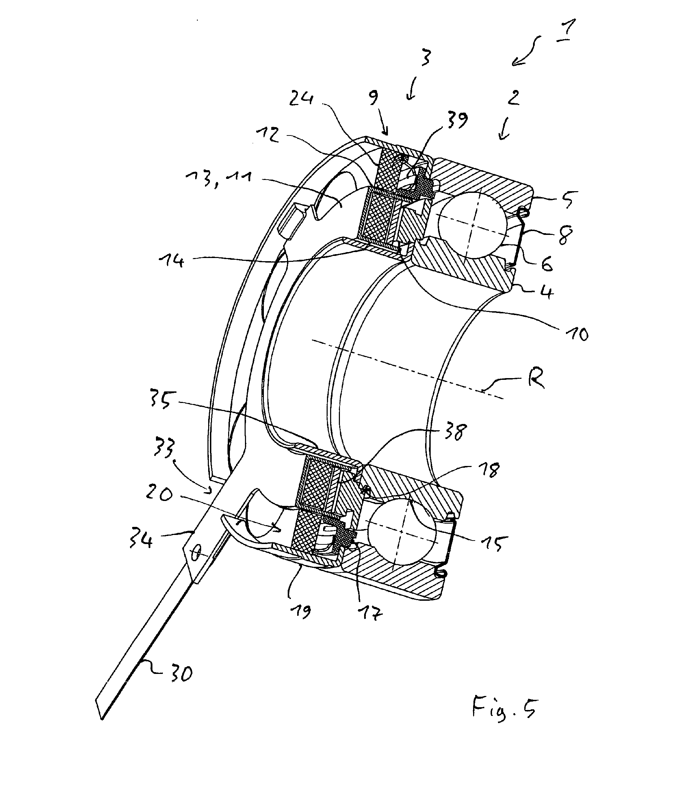

Die Ausführungsform nach Fig. 5 stimmt hinsichtlich der grundsätzlichen Funktion der Wälzlageranordnung 1 einschließlich Winkelsensor 3 mit dem Ausführungsbeispiel nach den Figuren 1 bis 4 überein. Unterschiede zwischen den beiden Ausführungsformen sind insbesondere hinsichtlich der mechanischen Anbindung des Winkelsensors 3 an das Wälzlager 2, des Anschlusses des Kabels 30, sowie der Form der Maßverkörperung 10 gegeben:

Das aus Kunststoff hergestellte, am Außenring 5 des Wälzlagers 2 befestigte, der Halterung des Sensorrings 9 dienende Halteelement 17 ist im Ausführungsbeispiel nach Fig. 5 im Vergleich zum Ausführungsbeispiel nach den Figuren 1 bis 4 in axialer Richtung, bezogen auf die Rotationsachse R, geringer ausgedehnt und grenzt an eine Stirnseite der Leiterplatte 24. Ebenso weist der Stützring 19 im Ausführungsbeispiel nach Fig. 5 eine geringere axiale Ausdehnung aus, womit die Wälzlageranordnung 1 insgesamt raumsparender aufgebaut ist. Dies wird durch eine extrem schmal bauende Konstruktion elektrischer und mechanischer Anschlussbauteile ermöglicht:

Die U-Basis 13 des Schalenkerns 11 ist mit einer durch eine Aussparung 33 des Stützrings 19 ragenden, radial nach außen gerichteten, streifenförmigen Kabelhalterung 34 einstückig verbunden. An dieser Kabelhalterung 34 aus Blech ist das Kabel 30, welches in diesem Fall als flexible Leiterplatte ausgebildet ist, befestigt. Innerhalb des U-förmigen Schalenkerns 11 ist die Platine, welche einstückig in das flache Kabel 30 übergeht, durch eine zusätzliche, festere Schicht verstärkt. Die metallische Kabelhalterung 34 erfüllt drei Funktionen, nämlich eine Zugentlastung, die Winkeleinstellung des Sensorrings 9, sowie einen Potentialausgleich zu Umgebungsbauteilen. Was die Winkellage des Sensorrings 9 betrifft, so ist für die Funktion des Winkelsensors 3 die Winkelrelation zwischen dem Schalenkern 11 und einem Umgebungsbauteil, insbesondere Motorgehäuse eines Elektromotors, maßgebend.

Zusätzlich zum äußeren Stützring 19 am Außenring 5 ist im Ausführungsbeispiel nach Fig. 5 ein innerer, am Innenring 4 gehaltener Stützring 35 vorgesehen, wobei beide Stützringe 19,35 die gleiche axiale Ausdehnung haben und etwas über die U-Basis 13 des Schalenkerns 11 hinaus ragen. Der innere Stützring 35 ermöglicht, ebenso wie der äußere Stützring 19, die Übertragung axialer Kräfte durch die Wälzlageranordnung 1 und stellt einen mechanischen Schutz des Winkelsensors 3 dar und sorgt zudem für eine verbesserte Abdichtung der Wälzlageranordnung 1.

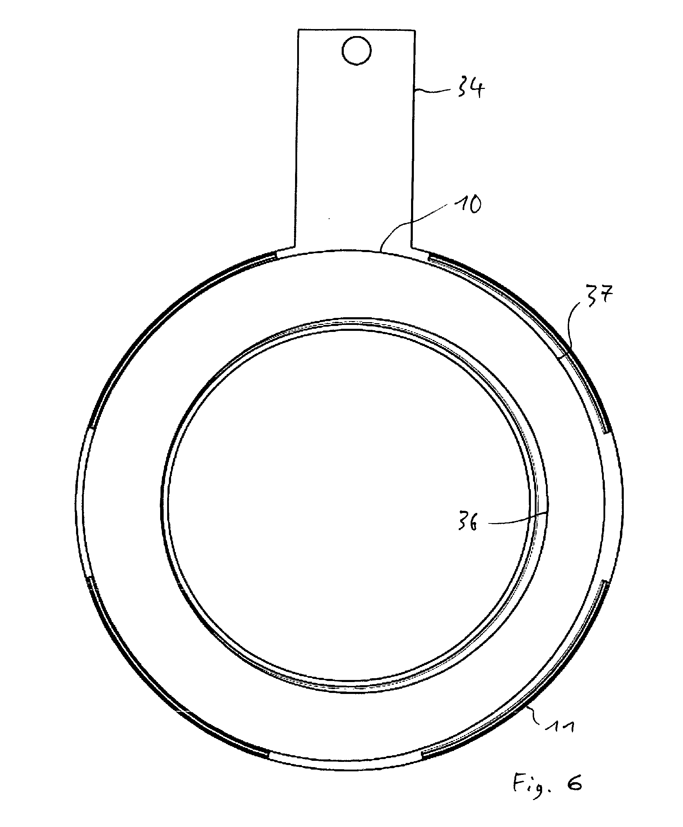

Zur optimierten Abdichtung trägt auch die Geometrie des als Maßverkörperung 10 dienenden Rings bei, welcher in Fig. 5 im Querschnitt erkennbar ist. In Fig. 6 ist dieser Ring, das heißt die Maßverkörperung 10 des Winkelsensors 3, in Draufsicht dargestellt. Hierbei ist gut die doppelexzentrische Form der Maßverkörperung 10 sichtbar: Sowohl eine Innenkontur 36 als auch eine Außenkontur 37 der Maßverkörperung 10 ist exzentrisch ausgebildet.

Die Montage der Wälzlageranordnung 1 nach Fig. 5 beginnt beispielsweise mit dem Eindrücken des Schalenkerns 11 in die ringförmige Leiterplatte 24. Anschließend wird eine nicht magnetische Distanzscheibe 38 in den Schalenkern 11 eingelegt, welche die Aufgabe hat, für einen exakt gleichbleibenden Abstand zwischen den U-Schenkeln 12,14 zu sorgen. Zum gleichen Zweck ist bei der fertig montierten Wälzlageranordnung 1, wie in Fig. 5 dargestellt, radial außerhalb des Schalenkerns 11, zwischen dem Halteelement 17 und dem äußeren Stützring 19, ein Federelement 39 vorgesehen, welches den äußeren U-Schenkel 12 gegen die zur U-Basis 13 parallele Distanzscheibe 38 drückt.

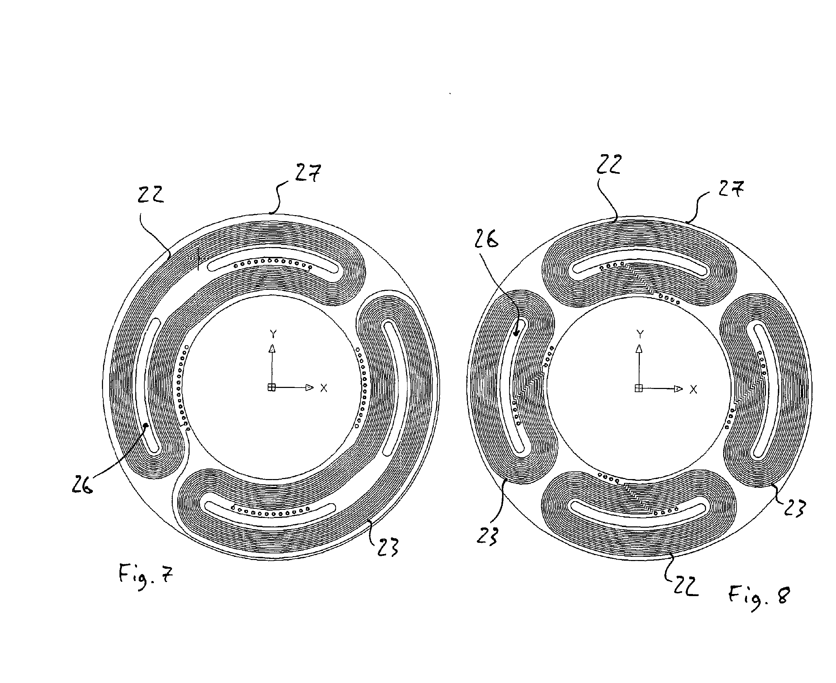

In den Figuren 7 und 8 sind verschiedene Varianten jeweils eines Layers 27 des Sensorrings 9 dargestellt, welche sowohl für die Ausführungsform nach den Figuren 1 bis 4 als auch für die Ausführungsform nach den Figuren 5 und 6 geeignet sind. Während im Beispiel nach Figur 7, ebenso wie im Beipiel nach Fig. 4, lediglich entweder zwei Sinus-Spulen 22 oder zwei Cosinus-Spulen 23 auf dem Layer 27 angeordnet sind, weist der Layer 27 nach Fig. 8 vier Spulen, nämlich zwei Sinus-Spulen 22 und zwei Cosinus-Spulen 23 auf, wobei sich jede dieser Empfangsspulen 22,23 über annähernd 90° erstreckt. Sämtliche Layer 27 der Leiterplatte 24 nach Figur 8 sind deckungsgleich, das heißt ohne Verdrehung zueinander, angeordnet. Durch die Anordnung sowohl von Sinus-Spulen und Minus-Sinus-Spulen 22 als auch von Cosinus-Spulen und Minus-Cosinus-Spulen 23 auf einem einzigen Layer 27 ist die Anzahl der Layer 27 bei identischer Zahl an Windungen 28,29 halb so groß wie in der Variante nach Fig. 7. Im Unterschied zur Variante nach Fig. 7 umschließt gemäß Fig. 8 jede Windung 28,29 nicht zwei, sondern lediglich eine von vier schlitzförmigen Öffnungen 25 der Leiterplatte 24. Mit allen Ausführungsformen sind Winkelauflösungen in der Größenordnung von 1° erreichbar.

### Bezugszeichenliste

- 1: Wälzlageranordnung
- 2: Wälzlager
- 3: Winkelsensor
- 4: Innenring
- 5: Außenring
- 6: Wälzkörper
- 7: Käfig
- 8: Dichtscheibe
- 9: Sensorring
- 10: Maßverkörperung
- 11: Schalenkern
- 12: äußerer U-Schenkel
- 13: U-Basis
- 14: innerer U-Schenkel
- 15: Laufbahn
- 16: Dichtspalt
- 17: Halteelement
- 18: umlaufende Nut
- 19: Stützring
- 20: Ringraum
- 21: Sendespule
- 22: Empfangsspule
- 23: Empfangsspule
- 24: Leiterplatte
- 25: Öffnung
- 26: Schlitz
- 27: Layer
- 28: Windung
- 29: Windung
- 30: Kabel
- 31: Ansteuer- und Auswerteeinheit
- 32: Befestigungslasche
- 33: Aussparung
- 34: Kabelhalterung
- 35: Stützring
- 36: Innenkontur
- 37: Außenkontur
- 38: Distanzscheibe
- 39: Federelement

- R: Rotationsachse

## Patentansprüche

1. Wälzlageranordnung (1) mit einem Winkelsensor (3), umfassend
- ein Wälzlager (2) mit zwei zu einer Rotationsachse (R) konzentrischen Lagerringen (4,5), nämlich einem Innenring (4) und einem Außenring (5), wobei zwischen den Lagerringen (4,5) Wälzkörper (6) angeordnet sind,
- einen mit dem Wälzlager (2) gekoppelten, zur Detektion der Winkelstellung des ersten Lagerrings (4) relativ zum zweiten Lagerring (5) vorgesehenen Winkelsensor (3), welcher
- einen mit einem der Lagerringe (4,5) verbundenen Sensorring (9) und eine drehfest mit dem zweiten Lagerring (5,4) verbundene Maßverkörperung (10) aufweist, wobei
- auf dem Sensorring (9) Spulen (21,22,23), nämlich mindestens eine Sendespule (21) und mindestens eine Empfangsspule (22,23), angeordnet sind, wobei ein Signal über einen magnetischen Kreis zwischen der Sendespule (21) und der Empfangsspule (22,23) übertragbar und durch die Maßverkörperung (10) eine variable Reluktanz in dem magnetischen Kreis gegeben ist, **dadurch gekennzeichnet, dass**
- die Sendespule (21) die Rotationsachse (R) umschließt und in einem einen Teil des magnetischen Kreises bildenden, einen U-förmigen Querschnitt aufweisenden, ringförmigen, zur Rotationsachse (R) konzentrischen, mit einem der Lagerringe (4,5) verbundenen Schalenkern (11) angeordnet ist,
- die Maßverkörperung (10) als Ring ausgebildet ist, welcher eine magnetisch leitende Verbindung zwischen Schenkeln (12,14) des U-förmigen Schalenkerns (11) bildet,
- eine Empfangsspulen (22,23) teilweise innerhalb und teilweise außerhalb des Schalenkerns (11) angeordnet ist.

2. Wälzlageranordnung (1) nach Anspruch 1, **dadurch gekennzeichnet, dass** mindestens eine Spule (21,22,23) als gedruckte Schaltung ausgebildet ist.

3. Wälzlageranordnung (1) nach Anspruch 2, **dadurch gekennzeichnet, dass** verschiedene Empfangsspulen (22,23), nämlich jeweils durch mehrere Windungen (28,29) gebildete Sinus-Spulen (22) und Cosinus-Spulen (23), vorgesehen sind, wobei die Windungen (28) der Sinus- Spulen (22) beziehungsweise die Windungen (29) der Cosinus-Spulen (29) alternierend auf aufeinanderliegenden Layern (27) einer als Mulitlayer-Leiterplatte (24) ausgebildeten gedruckten Schaltung angeordnet sind.

4. Wälzlageranordnung (1) nach Anspruch 3, **dadurch gekennzeichnet, dass** auf jedem Layer (27) zwei jeweils aus mehreren ineinander liegenden Windungen (28) aufgebaute Windungsanordnungen einer Sinus-Spule (22) beziehungsweise zwei jeweils aus mehreren ineinander liegenden Windungen (29) aufgebaute Windungsanordnungen einer Cosinus-Spule (23) angeordnet sind.

5. Wälzlageranordnung (1) nach Anspruch 2, **dadurch gekennzeichnet, dass** verschiedene Empfangsspulen (22,23), nämlich jeweils durch mehrere Windungen (28,29) gebildete Sinus-Spulen (22) und Cosinus-Spulen (23), vorgesehen sind, wobei Windungen (28) der Sinus- Spulen (22) sowie Windungen (29) der Cosinus-Spulen (29) auf einem gemeinsamen Layer (27) einer als Mulitlayer-Leiterplatte (24) ausgebildeten gedruckten Schaltung angeordnet sind.

6. Wälzlageranordnung (1) nach Anspruch 5, **dadurch gekennzeichnet, dass** auf einem Layer (27) zwei Windungen (28) einer Sinus-Spule (22) sowie zwei Windungen (29) einer Cosinus-Spule (23) angeordnet sind.

7. Wälzlageranordnung (1) nach Anspruch 1, **gekennzeichnet durch** eine an die Spulen (21,22,23) angeschlossene Ansteuer- und Auswerteeinheit (31), welche außerhalb des Winkelsensors (3) angeordnet ist.

8. Wälzlageranordnung (1) nach Anspruch 1, **dadurch gekennzeichnet, dass** das Wälzlager (2) als Radiallager ausgebildet ist, wobei der Sensorring (9) mit dem Außenring (5) als erstem Lagerring und die Maßverkörperung (10) in Form eines zur Rotationsachse (R) exzentrischen Rings mit dem Innenring (4) als zweitem Lagerring verbunden ist.

9. Wälzlageranordnung (1) nach Anspruch 1, **dadurch gekennzeichnet, dass** das Wälzlager (2) als Radiallager ausgebildet ist, wobei der Sensorring (9) mit dem Außenring (5) als erstem Lagerring und die Maßverkörperung (10) in Form eines zur Rotationsachse (R) konzentrischen, nicht parallele Deckflächen aufweisenden Rings mit dem Innenring (4) als zweitem Lagerring verbunden ist.

10. Wälzlageranordnung (1) nach Anspruch 8, **dadurch gekennzeichnet, dass** der Sensorring (9) sowohl auf seiner radial inneren Seite als auch auf seiner radial äußeren Seite eine exzentrische Kontur aufweist.

11. Wälzlageranordnung (1) nach einem der Ansprüche 8 bis 10, **dadurch gekennzeichnet, dass** der Schalenkern (11) an seinem radial äußeren U-Schenkel (12) mehrfach durchbrochen ist.

12. Wälzlageranordnung (1) nach einem der Ansprüche 8 bis 11, **dadurch gekennzeichnet, dass** der Schalenkern (11) von einem Halteelement (17) radial umgeben ist, welches am Außenring (5) befestigt ist.

13. Wälzlageranordnung (1) nach Anspruch 12, **dadurch gekennzeichnet, dass** das Halteelement (17) als Kunststoffspritzgussteil ausgebildet ist.

14. Wälzlageranordnung (1) nach Anspruch 12 oder 13, **dadurch gekennzeichnet, dass** das Halteelement (17) radial von einem Stützring (19) aus Metall umgeben ist, welcher eine Stirnseite des Außenrings (5) kontaktiert.

15. Wälzlageranordnung (1) nach Anspruch 14, **dadurch gekennzeichnet, dass** der Stützring (19) den Schalenkern (11) in Axialrichtung überragt, wobei der Stützring (19) in seinem den Schalenkern (11) überragenden Bereich eine von seinem Umfang radial nach innen abknickende Befestigungslasche (32) zur Halterung eines an den Sensorring (9) angeschlossenen Kabels (30) aufweist.

16. Wälzlageranordnung (1) nach Anspruch 14, **dadurch gekennzeichnet, dass** der Stützring (19) den Schalenkern (11) in Axialrichtung überragt, wobei der Stützring (19) an seinem Umfang eine Aussparung (33) aufweist, durch welche eine einstückig mit dem Schalenkern (11) ausgebildete, streifenförmige Kabelhalterung (34) radial nach außen ragt.

17. Wälzlageranordnung (1) nach Anspruch 8 oder 9, **dadurch gekennzeichnet, dass** der radial äußere U-Schenkel (12) des Schalenkerns (11) radial außerhalb des Innenrings (4) und der radial innere U-Schenkel (14) des Schalenkerns (11) radial innerhalb der durch den Innenring (4) gebildeten Laufbahn (15) der Wälzkörper (6) angeordnet ist.

18. Wälzlageranordnung (1) nach Anspruch 8 oder 9, **dadurch gekennzeichnet, dass** zwischen dem radial inneren U-Schenkel (14) des Schalenkerns (11) und einer Stirnseite des Innenrings (4) ein Dichtspalt (16) gebildet ist.

19. Wälzlageranordnung (1) nach Anspruch 1, **gekennzeichnet durch** eine zwischen den Schenkeln (12,14) des U-förmigen Schalenkerns (11) angeordnete Distanzscheibe (38) aus einem nichtmagnetischen Material.

20. Wälzlageranordnung (1) nach Anspruch 19, **gekennzeichnet durch** ein radial außerhalb des Schalenkerns (11) angeordnetes, den äußeren U-Schenkel (12) gegen die Distanzscheibe (38) drückendes Federelement (39).

21. Sensoranordnung mit einem Winkelsensor (3), umfassend einen eine Rotationsachse (R) umschließenden Sensorring (9) und eine relativ zu diesem rotierbare Maßverkörperung (10), wobei
- auf dem Sensorring (9) Spulen (21,22,23), nämlich mindestens eine Sendespule (21) und mindestens eine Empfangsspule (22,23), angeordnet sind, wobei ein Signal über einen magnetischen Kreis zwischen der Sendespule (21) und der Empfangsspule (22,23) übertragbar und durch die Maßverkörperung (10) eine variable Reluktanz in dem magnetischen Kreis gegeben ist,
- die Sendespule (21) in einem einen Teil des magnetischen Kreises bildenden, einen U-förmigen Querschnitt aufweisenden, ringförmigen, zur Rotationsachse (R) konzentrischen Schalenkern (11) angeordnet ist,
- die Maßverkörperung (10) als Ring, welcher den magnetischen Kreis zwischen den Schenkeln (12,14) des U-förmigen Schalenkerns (11) schließt, ausgebildet ist,
- eine Empfangsspule (22,23) teilweise innerhalb und teilweise außerhalb des Schalenkerns (11) angeordnet ist.

22. Verfahren zur Montage einer Wälzlageranordnung (1) mit einem Winkelsensor (3), mit folgenden Schritten:
- ein als Radiallager ausgebildetes Wälzlager (2) mit zwei Lagerringen (4,5), nämlich einem Innenring (4) und einem Außenring (5), wobei in jedem Lagerring (4,5) eine einer Wälzkörperlaufbahn (15) benachbarte, umlaufende Nut (18) ausgebildet ist, wird bereitgestellt,
- ein zur Rotationsachse (R) des Wälzlagers (2) exzentrischer, als Maßverkörperung (10) fungierender Ring wird in die umlaufende Nut (18) des Innenrings (4) eingeschnappt,
- ein als Kunststoffspritzgussteil ausgebildetes Halteelement (17) wird in einen Stützring (19) aus Metall, dessen Außendurchmesser höchstens dem Außendurchmesser des Außenrings (5) des Wälzlagers (2) entspricht, eingesetzt,
- das Halteelement (17) wird in die umlaufende Nut (18) des Außenrings (5) eingeschnappt, wobei der Stützring (19) an einer Stirnseite des Außenrings (5) anschlägt,
- ein als gedruckte Schaltung ausgebildeter, zur Durchführung einer Winkelmessung nach dem Prinzip der variablen Reluktanz vorgesehener Sensorring (9), auf welchem Spulen (21,22,23), nämlich mindestens eine Sendespule (21) und mindestens eine Empfangsspule (22,23), angeordnet sind, wird auf das Halteelement (17) derart aufgesteckt, dass er sich teilweise in einem ringförmigen, dem Halteelement (17) benachbarten, Spalt (20) radial unmittelbar innerhalb des Stützrings (19) und teilweise radial innnerhalb des Halteelementes (17) befindet, wobei zwischen dem Innenumfang des Halteelementes (17) und den radial innerhalb des Halteelementes (17) angeordneten Teilen des Sensorrings (9) Abschnitte eines Ringraums beschreibende Schlitze (26) verbleiben,
- ein ringförmiger, im Querschnitt U-förmiger, zur Stirnseite des Wälzlagers (2) hin offener Schalenkern (11) aus einem ferromagnetischen Werkstoff, der ebenso wie der exzentrische Ring (10) eine Komponente eines magnetischen Kreises bildet, wird in Axialrichtung auf die Anordnung aus Halteelement (17), Stützring (19) und Sensorring (9) aufgeschoben und mit dieser verschnappt, wobei ein radial außen angeordneter U-Schenkel (12) des Schalenkerns (11), am Innenumfang des Halteelements (17) anliegend, in die an dieses grenzenden Schlitze (26) eingreift, während ein innerer U-Schenkel (14) des Schalenkerns (11) vollständig radial innerhalb des Sensorrings (9) angeordnet ist.

## Claims

1. Roller bearing arrangement (1) with an angle sensor (3), comprising
- a roller bearing (2) with two bearing rings (4, 5), to be precise an inner ring (4) and an outer ring (5), which are concentric with respect to a rotational axis (R), wherein roller bodies (6) are arranged between the bearing rings (4, 5),
- an angle sensor (3) which is coupled to the roller bearing (2), is provided for detecting the angular postion of the first bearing ring (4) relative to the second bearing ring (5) and
- has a sensor ring (9) which is connected to one of the bearing rings (4, 5) and has a measuring scale (10) which is connected in a rotationally fixed fashion to the second bearing ring (5, 4), wherein
- coils (21, 22, 23), to be precise at least one transmission coil (21) and at least one reception coil (22, 23) are arranged on the sensor ring (9), wherein a signal can be transmitted between the transmission coil (21) and the reception coil (22, 23) via a magnetic circuit, and a variable reluctance in the magnetic circuit is provided by means of the measuring scale (10), **characterized in that**
- the transmission coil (21) encloses the rotational axis (R) and is arranged in a pot core (11) which forms part of the magnetic circuit, has a U-shaped cross section, is annular and concentric with respect to the rotational axis (R), and is connected to one of the bearing rings (4, 5),
- the measuring scale (10) is embodied as a ring which forms a magnetically conductive connection between limbs (12, 14) of the U-shaped pot core (11), and
- a reception coil (22, 23) is arranged partially inside and partially outside the pot core (11).

2. Roller bearing arrangement (1) according to Claim 1, **characterized in that** at least one coil (21, 22, 23) is embodied as a printed circuit board.

3. Roller bearing arrangement (1) according to Claim 2, **characterized in that** various reception coils (22, 23), to be precise respectively sine coils (22) formed by a plurality of turns (28, 29) and cosine coils (23) are provided, wherein the turns (28) of the sine coils (22) or the turns (29) of the cosine coils (23) are respectively arranged in an alternating fashion on successive layers (27) of a printed circuit board which is embodied as a multi-layer printed circuit board (24).

4. Roller bearing arrangement (1) according to Claim 3, **characterized in that** two turn arrangements, each constructed from a plurality of turns (28) lying one in the other, of a sine coil (22) or two turn arrangements, each constructed from a plurality of turns (29) lying one in the other, of a cosine coil (23) are arranged on each layer (27).

5. Roller bearing arrangement (1) according to Claim 2, **characterized in that** various reception coils (22, 23), to be precise sine coils (22) and cosine coils (23) which are each formed by a plurality of turns (28, 29) are provided, wherein turns (28) of the sine coils (22) and turns (29) of the cosine coils (23) are arranged on a common layer (27) of a printed circuit board which is embodied as a multi-layer printed circuit board (24).

6. Roller bearing arrangement (1) according to Claim 5, **characterized in that** two turns (28) of a sine coil (22) and two turns (29) of a cosine coil (23) are arranged on a layer (27).

7. Roller bearing arrangement (1) according to Claim 1, **characterized by** an actuation and evaluation unit (31) which is connected to the coils (21, 22, 23) and which is arranged outside the angle sensor (3).

8. Roller bearing arrangement (1) according to Claim 1, **characterized in that** the roller bearing (2) is embodied as a radial bearing, wherein the sensor ring (9) is connected to the outer ring (5) as a first bearing ring, and the measuring scale (10) is connected in the form of a ring which is eccentric with respect to the rotational axis (R) to the inner ring (4) as a second bearing ring.

9. Roller bearing arrangement (1) according to Claim 1, **characterized in that** the roller bearing (2) is embodied as a radial bearing, wherein the sensor ring (9) is connected to the outer ring (5) as a first bearing ring, and the measuring scale (10) is connected to the inner ring (4) as a second bearing ring, in the form of a ring which is concentric with respect to the rotational axis (R) and has non-parallel covering surfaces.

10. Roller bearing arrangement (1) according to Claim 8, **characterized in that** the sensor ring (9) has an eccentric contour both on its radially inner side and on its radially outer side.

11. Roller bearing arrangement (1) according to one of Claims 8 to 10, **characterized in that** the pot core (11) is penetrated repeatedly at its radially outer U-shaped limb (12).

12. Roller bearing arrangement (1) according to one of Claims 8 to 11, **characterized in that** the pot core (11) is radially surrounded by a securing element (17) which is attached to the outer ring (5).

13. Roller bearing arrangement (1) according to Claim 12, **characterized in that** the securing element (17) is embodied as a plastic injection moulded part.

14. Roller bearing arrangement (1) according to Claim 12 or 13, **characterized in that** the securing element (17) is radially surrounded by a supporting ring (19) made of metal, which supporting ring (19) is in contact with an end side of the outer ring (5).

15. Roller bearing arrangement (1) according to Claim 14, **characterized in that** the supporting ring (19) projects beyond the pot core (11) in the axial direction, wherein the supporting ring (19) has, in its region projecting beyond the pot core (11), an attachment clip (32) which bends radially inward from its circumference, in order to secure a cable (30) which is connected to the sensor ring (9).

16. Roller bearing arrangement (1) according to Claim 14, **characterized in that** the supporting ring (19) projects beyond the pot core (11) in the axial direction, wherein the supporting ring (19) has, on its circumference, a cutout (33) through which a strip-shaped cable-securing means (34), embodied in one piece with the pot core (11), projects radially outwards.

17. Roller bearing arrangement (1) according to Claim 8 or 9, **characterized in that** the radially outer U-shaped limb (12) of the pot core (11) is arranged radially outside the inner ring (4), and the radially inner U-shaped limb (14) of the pot core (11) is arranged radially inside the raceway (15), formed by the inner ring (4), of the roller bodies (6).

18. Roller bearing arrangement (1) according to Claim 8 or 9, **characterized in that** a sealing gap (16) is formed between the radially inner U-shaped limb (14) of the pot core (11) and an end side of the inner ring (4).

19. Roller bearing arrangement (1) according to Claim 1, **characterized by** a spacer washer (38), which is arranged between the limbs (12, 14) of the U-shaped pot core (11) and is made of a non-magnetic material.

20. Roller bearing arrangement (1) according to Claim 19, **characterized by** a spring element (39) which is arranged radially outside the pot core (11) and presses the outer U-shaped limb (12) against the spacer washer (38).

21. Sensor arrangement having an angle sensor (3), comprising a sensor ring (9) which encloses a rotational axis (R) and a measuring scale (10) which can be rotated in relation to the latter, wherein
- coils (21, 22, 23), to be precise at least one transmission coil (21) and at least one reception coil (22, 23) are arranged on the sensor ring (9), wherein a signal can be transmitted between the transmission coil (21) and the reception coil (22, 23) via a magnetic circuit, and a variable reluctance is provided in the magnetic circuit by means of the measuring scale (10),
- the transmission coil (21) is arranged in a pot core (11) which forms part of the magnetic cicuit, has a U-shaped cross section, and is annular and concentric with respect to the rotational axis (R),
- the measuring scale (10) is embodied as a ring which closes the magnetic circuit between the limbs (12, 14) of the U-shaped pot core (11), and
- a reception coil (22, 23) is arranged partially inside and partially outside the pot core (11).

22. Method for mounting a roller bearing arrangement (1) with an angle sensor (3), comprising the following steps:
- a roller bearing (2) which is embodied as a radial bearing and has two bearing rings (4, 5), to be precise an inner ring (4) and an outer ring (5), wherein a circumferential groove (18) which is adjacent to a roller bearing raceway (15) is formed in each bearing ring (4, 5), is made available,
- a ring which is eccentric with respect to the rotational axis (R) of the roller bearing (2) and functions as a measuring scale (10) is clipped into the circumferential groove (18) of the inner ring (4),
- a securing element (17) which is embodied as a plastic injection moulded part is inserted into a supporting ring (19) made of metal, the outer diameter of which supporting ring (19) corresponds at maximum to the outer diameter of the outer ring (5) of the roller bearing (2),
- the securing element (17) is clipped into the circumferential groove (18) of the outer ring (5), wherein the supporting ring (19) abuts against an end side of the outer ring (5),
- a sensor ring (9) which is embodied as a printed circuit board, is provided for carrying out an angle measurement according to the principle of variable reluctance and on which coils (21, 22, 23), to be precise at least one transmission coil (21) and at least one reception coil (22, 23) are arranged, is plugged onto the securing element (17) in such a way that it is located partially in an annular gap (20), which is adjacent to the securing element (17), radially directly inside the supporting ring (19) and partially radially inside the securing element (17), wherein slots (26) which describe sections of an annular space remain between the inner circumference of the securing element (17) and the parts of the sensor ring (9) arranged radially inside the securing element (17),
- an annular pot core (11), which is U-shaped in cross section, is open towards the end side of the roller bearing (2) and is made of a ferromagnetic material, which, like the eccentric ring (10), forms a component of a magnetic circuit, is fitted in the axial direction onto the arrangement comprising the securing element (17), supporting ring (19) and sensor ring (9) and secured thereon by a snap action, wherein a U-shaped limb (12) arranged radially on the outside of the pot core (11) engages in the slots (26) adjoining the securing element (17) in such a way that it bears against the inner circumference of said securing element (17), while an inner U-shaped limb (14) of the pot core (11) is arranged completely radially inside the sensor ring (9).

## Revendications

1. Ensemble (1) de palier de roulement doté d'un capteur (3) d'angle et comprenant :
un palier de roulement (2) présentant deux bagues de palier (4, 5) concentriques par rapport à un axe de rotation (R), à savoir une bague intérieure (4) et une bague extérieure (5), des corps de roulement (6) étant disposés entre les bagues de palier (4, 5),
un capteur (3) d'angle raccordé au palier de roulement (2) et prévu pour détecter la position angulaire de la première bague de palier (4) par rapport à la deuxième bague de palier (5) et qui présente une bague de capteur (9) raccordée à l'une des bagues de palier (4, 5) et un ensemble de mesure (10) raccordé à rotation solidaire à la deuxième bague de palier (5, 4),
des bobines (21, 22, 23), à savoir au moins une bobine émettrice (21) et au moins une bobine réceptrice (22, 23) étant disposées sur la bague de palier (9), un signal pouvant être transmis par l'intermédiaire d'un circuit magnétique entre la bobine émettrice (21) et la bobine réceptrice (22, 23), l'ensemble de mesure (10) définissant une réductance variable dans le circuit magnétique,
**caractérisé en ce que**
la bobine émettrice (21) entoure l'axe de rotation (R) et est disposée dans une âme de coquille (11) raccordée à l'une des bagues de palier (4, 5), formant une partie de circuit magnétique, présentant une section transversale en forme de U, annulaire et concentrique par rapport à l'axe de rotation (R),
**en ce que** l'ensemble de mesure (10) est configuré comme bague qui forme une liaison magnétiquement conductrice entre les branches (12, 14) de l'âme de coquille (11) en forme de U et
**en ce qu'**une bobine réceptrice (22, 23) est disposée en partie à l'intérieur et en partie à l'extérieur de l'âme de coquille (11).

2. Ensemble (1) de palier de roulement selon la revendication 1, **caractérisé en ce qu'**au moins une bobine (21, 22, 23) est configurée comme circuit imprimé.

3. Ensemble (1) de palier de roulement selon la revendication 2, **caractérisé en ce que** différentes bobines réceptrices (22, 23) sont prévues, à savoir des bobines sinusoïdales (22) et des bobines cosinusoïdales (23) formées par plusieurs enroulements (28, 29), les enroulements (28) des bobines sinusoïdales (22) et les enroulements (29) des bobines cosinusoïdales (23) étant disposés en alternance sur des couches superposées (27) d'un circuit imprimé configuré comme carte de circuit (24) multicouche.

4. Ensemble (1) de palier de roulement selon la revendication 3, **caractérisé en ce que** deux ensembles d'enroulement d'une bobine sinusoïdale (22), constitués chacun de plusieurs enroulements (28) disposés les uns à l'intérieur des autres et deux ensembles d'enroulement d'une bobine cosinusoïdale (23), constitués de plusieurs enroulements (29) situés les uns à l'intérieur des autres, sont disposés sur chaque couche (27).

5. Ensemble (1) de palier de roulement selon la revendication 2, **caractérisé en ce que** différentes bobines réceptrices (22, 23) sont prévues, à savoir des bobines sinusoïdales (22) et des bobines cosinusoïdales (23) formées par plusieurs enroulements (28, 29), les enroulements (28) des bobines sinusoïdales (22) et les enroulements (29) des bobines cosinusoïdales (23) étant disposés sur une couche commune (27) d'un circuit imprimé configuré comme carte de circuit (24) multicouche.

6. Ensemble (1) de palier de roulement selon la revendication 5, **caractérisé en ce que** deux enroulements (28) d'une bobine sinusoïdale (22) et deux enroulements (29) d'une bobine cosinusoïdale (23) sont disposés sur une couche (27).

7. Ensemble (1) de palier de roulement selon la revendication 1, **caractérisé par** une unité de commande et d'évaluation (31) raccordée aux bobines (21, 22, 23) et disposée à l'extérieur du capteur (3) d'angle.

8. Ensemble (1) de palier de roulement selon la revendication 1, **caractérisé en ce que** le palier de roulement (2) est configuré comme palier radial, la bague de capteur (9) étant raccordée à la bague extérieure (5) formant une première bague de palier et l'ensemble de mesure (10) présentant la forme d'une bague décentrée par rapport à l'axe de rotation (R) étant raccordée à la bague intérieure (4) formant une deuxième bague de palier.

9. Ensemble (1) de palier de roulement selon la revendication 1, **caractérisé en ce que** le palier de roulement (2) est configuré comme palier radial, la bague de capteur (9) étant raccordée à la bague extérieure (5) formant une première bague de palier et l'ensemble de mesure (10) qui présente la forme d'une bague présentant des surfaces de recouvrement non parallèles et concentriques par rapport à l'axe de rotation (R) est reliée à la bague intérieure (4) formant la deuxième bague de palier.

10. Ensemble (1) de palier de roulement selon la revendication 8, **caractérisé en ce que** la bague de capteur (9) présente un contour décentré tant sur son côté radialement intérieur que son côté radialement extérieur.

11. Ensemble (1) de palier de roulement selon l'une des revendications 8 à 10, **caractérisé en ce que** l'âme de coquille (11) est traversée plusieurs fois sur la branche radialement extérieure (12) du U.

12. Ensemble (1) de palier de roulement selon l'une des revendications 8 à 11, **caractérisé en ce que** l'âme de coquille (11) est entourée radialement par un élément de maintien (17) fixé sur la bague extérieure (5).

13. Ensemble (1) de palier de roulement selon la revendication 12, **caractérisé en ce que** l'élément de maintien (17) est configuré sous la forme d'une pièce en matière synthétique moulée par injection.

14. Ensemble (1) de palier de roulement selon les revendications 12 ou 13, **caractérisé en ce que** l'élément de maintien (17) est entouré radialement par une bague de soutien (19) en métal qui est en contact avec un côté frontal de la bague extérieure (5).

15. Ensemble (1) de palier de roulement selon la revendication 14, **caractérisé en ce que** la bague de soutien (19) déborde de l'âme de coquille (11) dans la direction axiale, la bague de soutien (19) présentant sur sa partie qui déborde de l'âme de coquille (11) une patte de fixation (32) coudée radialement vers l'intérieur sur sa périphérie pour le maintien d'un câble (30) raccordé à la bague de capteur (9).

16. Ensemble (1) de palier de roulement selon la revendication 14, **caractérisé en ce que** la bague de soutien (19) déborde de l'âme de coquille (11) dans la direction axiale, la bague de soutien (19) présentant à sa périphérie une découpe (33) par laquelle un support (34) de câble, en forme de ruban et formé d'un seul tenant avec l'âme de coquille (11) déborde radialement vers l'extérieur.

17. Ensemble (1) de palier de roulement selon les revendications 8 ou 9, **caractérisé en ce que** la branche radialement extérieure (12) du U de l'âme de coquille (11) est disposée radialement à l'extérieure de la bague intérieure (4) et la branche radialement intérieure (14) du U de l'âme de coquille (11) est disposée radialement à l'intérieur de la piste de déplacement (15) des corps de roulement (6) formée par la bague intérieure (4).

18. Ensemble (1) de palier de roulement selon les revendications 8 ou 9, **caractérisé en ce qu'**un interstice d'étanchéité (16) est formé entre la branche radialement intérieure (14) du U de l'âme de coquille (11) et le côté frontal de la bague intérieure (4).

19. Ensemble (1) de palier de roulement selon la revendication 1, **caractérisé par** un disque d'écartement (38) disposé entre les branches (12, 14) de l'âme de coquille (11) en forme de U, en matériau non magnétique.

20. Ensemble (1) de palier de roulement selon la revendication 19, **caractérisé par** un élément élastique (39) disposé à l'extérieur de l'âme de coquille (11) et repoussant la branche extérieure (12) du U contre le disque d'écartement (38).

21. Ensemble de capteur doté d'un capteur (3) d'angle, et comportant une bague de capteur (9) qui entoure un axe de rotation (R) et un ensemble de mesure (10) apte à tourner par rapport à la bague de capteur,
des bobines (21, 22, 23), à savoir au moins une bobine émettrice (21) et au moins une bobine réceptrice (22, 23) sont disposées sur la bague de capteur (9), un signal pouvant être transmis par l'intermédiaire d'un circuit magnétique entre la bobine émettrice (21) et la bobine réceptrice (22, 23) et une réductance variable étant définie dans le circuit magnétique par l'ensemble de mesure (10),
la bobine émettrice (21) étant disposée dans une âme de coquille (11) formant une partie du circuit magnétique, présentant une section transversale en forme de U, annulaire et concentrique par rapport à l'axe de rotation (R),
l'ensemble de mesure (10) étant configuré comme bague qui ferme le circuit magnétique entre les branches (12, 14) de l'âme de coquille (11) en forme de U et
une bobine réceptrice (22, 23) étant disposée en partie à l'intérieur de l'âme de coquille (11).

22. Procédé de montage d'un ensemble de palier de roulement (1) doté d'un capteur (3) d'angle, le procédé présentant les étapes suivantes :
un palier de rotation (2) configuré comme palier radial et doté de deux bagues de palier (4, 5), à savoir une bague intérieure (4) et une bague extérieure (5), une rainure (18) périphérique, adjacente à une piste de déplacement (15) des corps de roulement, étant formée dans chaque bague de palier (4, 5), est formé,
une bague décentrée par rapport à l'axe de rotation (R) du palier de roulement (2) et fonctionnant comme ensemble de mesure (10) est encliquetée dans la rainure périphérique (18) de la bague intérieure (4),
un élément de maintien (17) configuré comme pièce en matière synthétique moulée par injection est inséré dans une bague de soutien (19) en métal dont le diamètre extérieur correspond au plus au diamètre extérieur de la bague extérieure (5) du palier de roulement (2),
l'élément de maintien (17) est encliqueté dans la rainure périphérique (18) de la bague extérieure (5), la bague de soutien (19) venant buter contre un côté frontal de la bague extérieure (5),
une bague de capteur (9) configurée comme circuit imprimé et prévue pour exécuter une mesure d'angle selon le principe de la réductance variable et sur laquelle des bobines (21, 22, 23), à savoir au moins une bobine émettrice (21) et au moins une bobine réceptrice (22, 23) sont disposées, est enfichée sur l'élément de maintien (17) de telle sorte qu'elle soit située en partie dans un interstice (20) de forme annulaire, voisin de l'élément de maintien (17), radialement directement à l'intérieur de la bague de soutien (19) et en partie radialement à l'intérieur de l'élément de maintien (17), des parties d'une fente (26) qui décrit un espace annulaire restant entre la périphérique intérieure de l'élément de maintien (17) et les parties de la bague de capteur (9) disposée radialement à l'intérieur de l'élément de maintien (17),
une âme de coquille (11), annulaire, de section transversale en forme de U et ouverte en direction du côté frontal du palier de roulement (2), en un matériau ferromagnétique, qui forme de même que la bague décentrée (10) en composant d'un circuit magnétique,
est enfichée dans la direction axiale sur l'ensemble constitué de l'élément de maintien (17), de la bague de soutien (19) et de la bague de capteur (9) et est encliquetée sur cet ensemble, une branche disposée radialement à l'extérieur (12) du U de l'âme de coquille (11), qui repose contre la périphérie intérieure de l'élément de maintien (17), s'engageant dans la fente (26) adjacente à ce dernier tandis qu'une branche intérieure (14) du U de l'âme de coquille (11) est entièrement disposée radialement à l'intérieur de la bague de capteur (9).
